## Europäisches Patentamt
## European Patent Office
## Office européen des brevets

(19)

(11) Numéro de publication: **0 117 964**

**A1**

(12) **DEMANDE DE BREVET EUROPEEN**

(21) Numéro de dépôt: **83450004.3**

(22) Date de dépôt: **03.03.83**

(51) Int. Cl.³: **G 01 B 11/00**
**G 01 B 9/02**

(43) Date de publication de la demande:
**12.09.84 Bulletin 84/37**

(84) Etats contractants désignés:
**BE CH DE FR GB IT LI NL SE**

(71) Demandeur: **GAME INGENIERIE Société Anonyme**
**22 boulevard Saint Martin**
**F-33600 Pessac(FR)**

(72) Inventeur: **Chevrier, René**
**13 les Prés de l'Eglise**
**Pompignac F-33370 Tresses(FR)**

(74) Mandataire: **Thébault, Jean-Louis**
**Cabinet Jean-Louis Thébault 50, Cours de Verdun**
**F-33000 Bordeaux(FR)**

(54) Dispositif de mesure et de correction du déplacement des organes mobiles d'un banc de mesure tridimensionnelle.

(57) Dispositif de mesure et de correction du déplacement suivant trois axes orthonormés X, Y et Z des équipages mobiles notamment d'un banc de mesure tridimensionnelle, caractérisé en ce qu'il comprend une source unique de faisceau laser (14) montée sur le bâti fixe (2) du banc et dirigeant son faisceau sur un premier ensemble de mesure aligné suivant un premier axe horizontal X et de préférence dédoublé en deux ensembles identiques (X1,X2) parallèles disposés au voisinage des extrémites d'un premier équipage mobile (3), sur un second ensemble de mesure aligné suivant un second axe horizontal (Y) et de préférence dédoublé en deux ensembles identiques (Y1,Y2) parallèles disposés au voisinage des extrémités d'un second équipage mobile (4) et sur un troisième ensemble de mesure aligné sur le troisième axe vertical (Z) et affecté au troisième équipage mobile (5) du banc de mesure, lesdits ensembles de mesure étant du type transducteur à laser.

Application notamment aux bancs de mesure tridimensionnelle.

./...

FIG.1.

TITRE MORTE
voir page de garde

– 1 –

## DISPOSITIF DE MESURE ET DE CORRECTION DU DEPLACEMENT SUIVANT TROIS AXES ORTHONORMES DES ORGANES MOBILES NOTAMMENT D'UN BANC DE MESURE TRIDIMENSIONNELLE

La présente invention a trait à un dispositif de mesure et de correction du déplacement en particulier des équipages ou ensembles mobiles portant la tête de palpage d'un banc de mesure tridimensionnelle.

Plus précisément, le but de l'invention est d'appliquer le principe du transducteur à laser à la détermination très précise du déplacement desdits équipages mobiles suivant les trois axes orthonormés X,Y et Z de mesure du banc.

A cet effet, l'invention a pour objet un dispositif de mesure et de correction du déplacement suivant trois axes orthonormés X,Y et Z des équipages mobiles notamment d'un banc de mesure tridimensionnelle, caractérisé en ce qu'il comprend une source unique de faisceau laser de type connu composé de deux signaux de fréquence F1 et F2 de polarisation circulaire inverse et très proches l'un de l'autre, montée sur le bâti fixe du banc et dirigeant son faisceau sur un premier ensemble de mesure constitué d'un premier interféromètre associé à un premier réflectomètre et d'un premier récepteur et aligné suivant un premier axe horizontal X ou Y, lesdits premiers interféromètre et récepteur étant montés fixes et ledit premier réflectomètre étant solidaire de l'équipage mobile du banc se déplaçant dans ledit premier axe horizontal, un premier diviseur de faisceau, fixe, interposé entre ladite source laser et ledit premier ensemble de mesure et envoyant par l'intermédiaire d'un premier miroir fixe une partie du faisceau émis sur un second ensemble de mesure constitué d'un second miroir, d'un second interféromètre associé à un second réflectomètre et d'un second récepteur, aligné suivant le second axe horizontal Y ou X, les seconds miroir, interféromètre et récepteur étant solidaires dudit premier équipage mobile du banc cependant que ledit second réflectomètre est solidaire du second équipage mobile du banc se déplaçant suivant le second axe horizontal Y ou X et un second diviseur interposé entre ledit premier miroir fixe et le second ensemble de mesure, solidaire dudit premier équipage mobile et envoyant, par l'intermédiaire d'un troisième miroir également solidaire du premier équipage mobile, une partie du faisceau traversant sur un troisième ensemble de mesure constitué d'un quatrième miroir, d'un miroir interféromètre, d'un troisième récepteur et d'un troisième réflectomètre, et aligné suivant le troisième axe vertical Z, lesdits second diviseur et troisième miroir étant solidaires dudit premier équipage mobile, lesdits quatrième miroir, miroir interféromètre et troisième récepteur étant solidaires dudit second équipage mobile et ledit troisième réflectomètre étant solidaire du troisième équipage mobile du banc, lui-même porté par ledit second équipage mobile et se déplaçant suivant ledit axe Z, les divers récepteurs étant reliés à une unité de calcul chargée de traiter les données fournies par les organes de palpage de la tête de mesure du banc, portée par ledit troisième équipage.

Un tel dispositif permet à partir d'un émetteur laser unique de mesurer de manière extrêmement précise les déplacements des organes du banc mobiles suivant les trois axes X, Y et Z, quels que soient les amplitudes desdits déplacements, les mesures s'effectuant suivant le principe connu du transducteur à laser.

Afin d'améliorer la précision de mesure en permettant une correction de la position de l'axe Z de déplacement du troisième équipage mobile ou coulisseau vertical porte-palpeur du banc, en particulier lorsque les premier et second équipages mobiles sont de dimensions importantes et peuvent prendre un faux équerrage par rapport au bâti sur lequel ils se déplacent, lesdits premier et second ensembles de mesure sont dédoublés chacun en deux ensembles identiques parallèles disposés au voisinage des extrémités des premier et second équipages mobiles, à l'aide de diviseurs de faisceau et de miroirs convenablement disposés.

Un tel dispositif permet, en effet, à l'aide d'un ensemble de calcul, de déterminer la courbe de la déformée relative à chacun des axes réels de déplacement horizontaux X et Y des premier et second équipages mobiles du banc, en vue de connaître la rotation qu'a éventuellement subie l'axe vertical Z de déplacement de la tête de palpage du banc.

D'autres caractéristiques et avantages ressortiront de la description qui va suivre d'un mode de réalisation du dispositif selon l'invention, description donnée à titre d'exemple uniquement et en regard des dessins sur lesquels :

- Figure 1 représente schématiquement l'agencement dans l'espace , selon l'invention, des ensembles de mesure du déplacement des trois équipages mobiles suivant les axes X,Y et Z d'un banc de mesure tridimensionnelle, les ensembles de mesure suivant X et Y étant dédoublés ;

- Figure 2 représente une vue en élévation partielle des trois équipages mobiles suivant les axes X,Y et Z d'un banc de mesure tridimensionnelle équipé conformément à l'invention ;

- Figure 3 représente une vue de dessus du dispositif de la figure 2, et

- Figure 4 représente une vue de gauche du dispositif de la Figure 2.

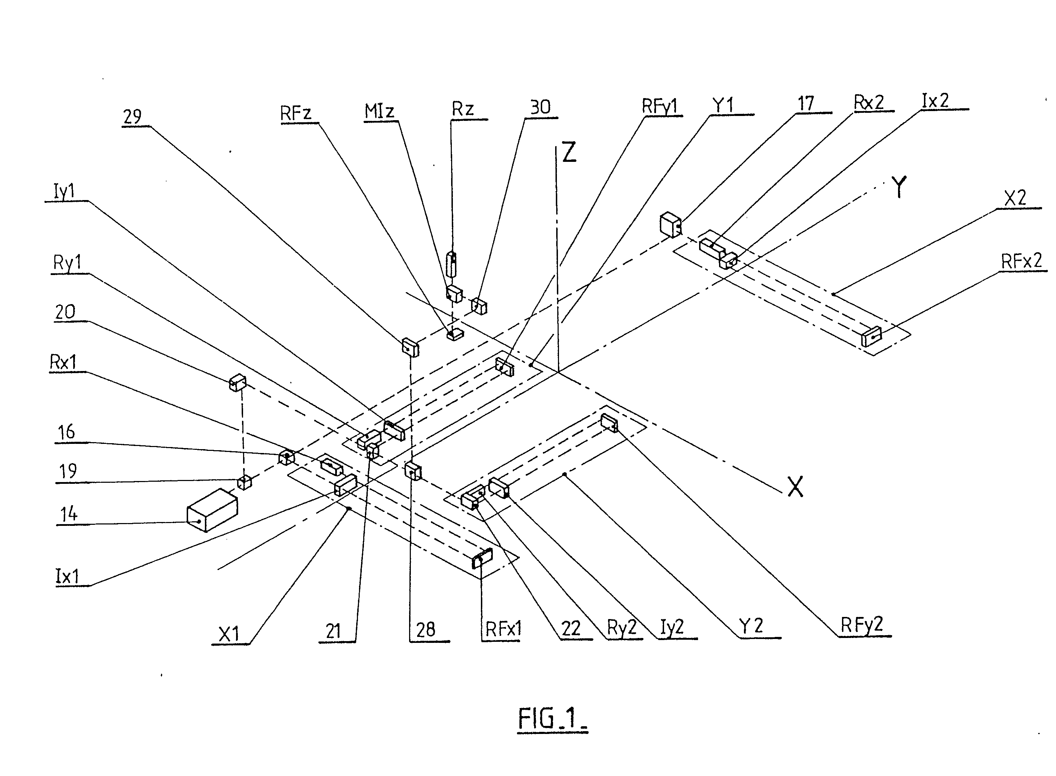

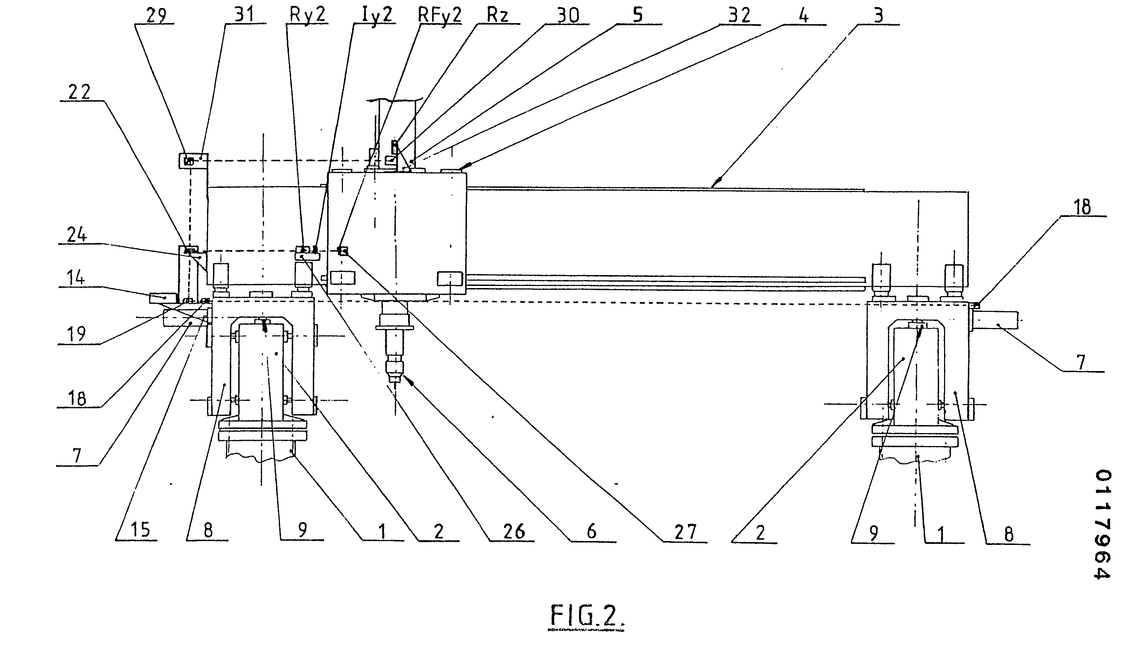

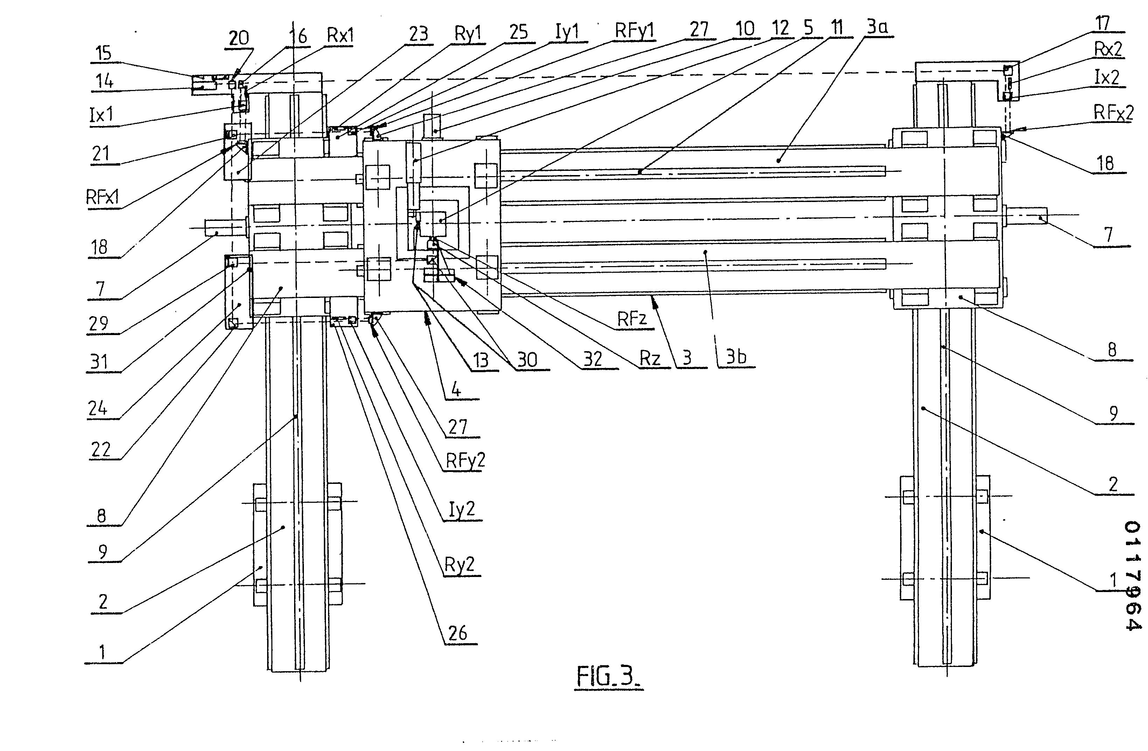

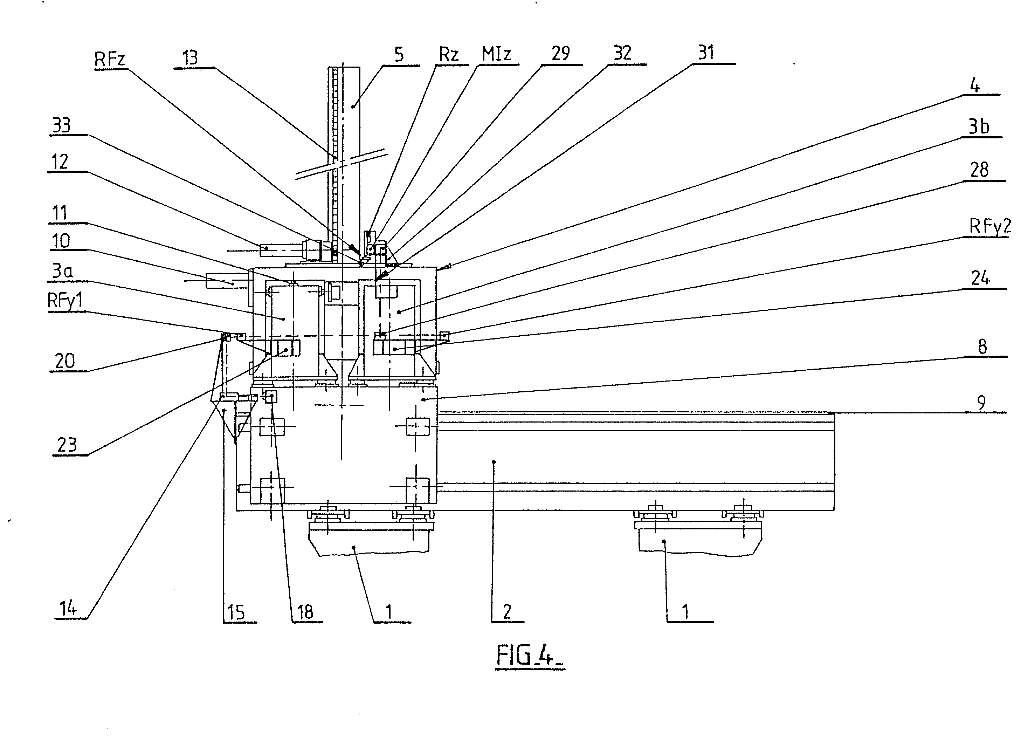

On a représenté sur la Figure 1 le schéma d'agencement dans l'espace des divers éléments d'un dispositif selon l'invention destiné à équiper un banc de mesure tridimensionnelle comportant (Figures 2 à 4) quatre colonnes verticales 1 supportant deux poutres parallèles horizontales 2 définissant un premier axe horizontal X du système de référence orthonormé X,Y,Z.

Le long de cet axe X se déplace un premier équipage mobile 3 du banc constitué de deux poutres parallèles horizontales jumelées 3a et 3b, orthogonales aux poutres 2 et définissant le second axe horizontal Y.

Le long des poutres jumelles 3a et 3b se déplace un second équipage mobile 4 du banc constitué d'un chariot à cheval sur les deux poutres 3a et 3b.

Le chariot 4 porte un coulisseau 5 mobile verticalement le long de l'axe Z et portant à son extrémité inférieure

0117964

une tête de palpage 6.

Les poutres jumelles 3$\underline{a}$ et 3$\underline{b}$ sont déplacées le long des poutres 2 à l'aide de deux moteurs électriques 7 montés sur deux bâtis en U inversé 8 supportant les extrémités des poutres 3$\underline{a}$ et 3$\underline{b}$.

Les moteurs 7 entraînent des pignons en prise avec des crémaillères 9 fixées sur la face supérieure des deux poutres fixes 2.

Le chariot 4 est mû le long des poutres 3$\underline{a}$ et 3$\underline{b}$ à l'aide d'un moteur électrique 10 porté par le chariot et entraînant un pignon en prise avec une crémaillère 11 fixée sur la face supérieure de la poutre 3$\underline{a}$.

Le coulisseau 5 est déplacé verticalement à l'aide d'un moteur électrique 12 solidaire du chariot 4 et entraînant un pignon en prise avec une crémaillère 13 fixée sur l'une des faces latérales du coulisseau.

Le dispositif selon l'invention comprend une source unique 14 d'émission d'un faisceau laser dont les caractéristiques seront définies plus loin.

La source émettrice 14 est montée fixe par exemple sur une console 15 fixée à une extrémité de l'une des poutres 2.

Le faisceau laser émis par la source 14 est envoyé sur un premier ensemble de mesure affecté à l'axe X et lui-même dédoublé en deux ensembles identiques $X_1$ et $X_2$ alignés parallèlement audit axe X.

A cet effet, ledit faisceau de sortie de l'émetteur 14 est divisé par un diviseur 16 en un premier faisceau parallèle à X et dirigé sur $X_1$ et en un second faisceau dirigé par un miroir 17 sur $X_2$. Les diviseur 16 et miroir 17 sont respectivement fixés sur les extrémités en regard des deux poutres 2.

Les deux ensembles $X_1$ et $X_2$ comprennent chacun un interféromètre $I_{X_1}$ et $I_{X_2}$, un récepteur $R_{X_1}$ et $R_{X_2}$ et un réflectomètre $RF_{X_1}$ et $RF_{X_2}$. Les interféromètres et récepteurs sont montes fixes à proximité respectivement du diviseur 16 et du miroir 17, cependant que les réflectomètres $RF_{X_1}$ et $RF_{X_2}$ sont solidaires chacun de l'une des extrémités de l'équipage mobile 3. A cet effet, lesdits réflectomètres sont fixés sur des équerres 18 rapportées sur la face externe des bâtis-supports 8.

0117964

Entre l'émetteur 14 et le diviseur 16 est interposé un diviseur 19 chargé d'envoyer le rayonnement laser, par l'intermédiaire d'un miroir 20, sur un second ensemble de mesure affecté à l'axe Y et lui-même également dédoublé en deux ensembles identiques Y1 et Y2 alignés parallèlement audit axe Y.

A cet effet, le faisceau réfléchi par le miroir 20 est dirigé sur un diviseur 21 envoyant une partie du faisceau sur Y1 et une autre partie sur Y2 par l'intermédiaire d'un miroir 22.

Les deux ensembles Y1 et Y2 comprennent chacun un interféromètre $I_{Y1}$ et $I_{Y2}$, un récepteur $R_{Y1}$ et $R_{Y2}$ et un réflectomètre $RF_{Y1}$, $RF_{Y2}$. Le diviseur 19 est monté fixe sur la console 15. Le miroir 20 est également monté fixe au dessus et à l'aplomb du diviseur 19.

Le diviseur 21 et le miroir 22 sont montés sur deux consoles 23, 24 fixées aux deux extrémités des poutres jumelles 3a, 3b.

Les interféromètres $I_{Y1}$, $I_{Y2}$ et les récepteurs $R_{Y1}$, $R_{Y2}$ sont montés sur deux consoles 25 et 26 fixées sur les flancs extérieurs des poutres 3a, 3b au voisinage du point-limite de la course du chariot 4. Les réflectomètres $RF_{Y1}$, $RF_{Y2}$ sont montés sur des équerres 27 fixées sur les flancs latéraux dudit chariot 4.

Entre le diviseur 21 et le miroir 22 est interposé un diviseur 28 chargé de diriger une partie du faisceau laser, par l'intermédiaire d'un premier miroir 29 et d'un second miroir 30, sur un troisième ensemble de mesure aligné sur l'axe Z. Cet ensemble comprend un miroir inferféromètre $MI_Z$, un récepteur $R_Z$ et un réflectomètre $RF_Z$.

Le diviseur 28 est fixé sur la console 24. le miroir 29 est fixé sur une équerre 31 solidaire de la poutre 3b, au dessus de la console 24.

Le miroir 30, le miroir interféromètre $MI_Z$ et le récepteur $R_Z$ sont portés par un support 32 fixé sur la face supérieure du chariot 4 à proximité immédiate du coulisseau 5.

Enfin, le réflectomètre $RF_Z$ est porté par une équerre 33 rapportée sur la face du coulisseau 5 tournée vers le miroir interféromètre $MI_Z$, à la verticale de ce dernier.

L'émetteur 14 est une source laser hélium-néon de faible puissance émettant un rayon cohérent de lumière rouge composé de deux signaux de fréquence F1 et F2 de polarisation circulaire inverse et très proches l'un de l'autre.

C'est ce rayon qui est envoyé par les divers diviseurs et miroirs sur les ensembles de mesure X1, X2, Y1, Y2 et $R_Z$.

Lesdits ensembles de mesure constituent des interféromètres à mesure linéaire dont le principe est connu et n'a pas besoin d'être décrit plus en détail. Des deux fréquences susdites F1, F2, l'une est renvoyée par un interféromètre ($I_{X1}$, $I_{X2}$, $I_{Y1}$, $I_{Y2}$, $MI_Z$) directement sur le récepteur associé ($R_{X1}$, $R_{X2}$, $R_{Y1}$, $R_{Y2}$, $R_Z$), cependant que l'autre fréquence, après réflexion sur le rétroflecteur associé ($RF_{X1}$, $RF_{X2}$, $RF_{Y1}$, $RF_{Y2}$, $RF_Z$), est renvoyée sur ledit récepteur après avoir subi un décalage en fréquence dû à l'effet DOPPLER lorsque le rétroflecteur se déplace.

Les divers récepteurs reçoivent bien entendu un signal de référence issu de la source 14 et constitué par la composante alternative entre F1 et F2. Les récepteurs comparent cycle par cycle leur signal de mesure avec le signal de référence et fournissent, par l'intermédiaire d'un mixeur à double sortie, des signaux impulsionnels correspondant à l'amplitude des déplacements des rétroflecteurs considérés.

Dans le mode de réalisation représenté et décrit ci-dessus on tient compte des éventuels faux équerrages, d'une part, de l'équipage 3 par rapport aux poutres 2 et, d'autre part, du chariot 4 par rapport aux poutres 3a, 3b.

Les poutres jumelles 3a, 3b sont, en effet, déplacées par les deux moteurs 7. Il se peut que les deux extrémités de l'ensemble 3a, 3b ne se déplacent pas de la même amplitude. Il s'ensuit une translation latérale de l'axe du coulisseau qu'il est important de connaître afin d'effectuer les corrections nécessaires.

C'est le système de calcul de l'ordinateur de commande et contrôle du banc tel que celui représenté et décrit qui va, en fonction des signaux fournis par les récepteurs $R_{X1}$, $R_{X2}$, $R_{Y1}$, $R_{Y2}$ et de la position du chariot 4 le long des poutres 3a, 3b, élaborer les courbes des déformées de la trajectoire du chariot 4 et déterminer à tout moment l'écart entre l'axe réel du coulisseau 5 et l'axe théorique Z, quelle que soit la position du chariot 4 le long de l'ensemble 3. Cet écart sera bien entendu intégré dans les calculs de cotes issus des mesures effectuées par les palpeurs de la tête de mesure 6.

Enfin, l'invention n'est évidemment pas limitée au mode de réalisation représenté et décrit ci-dessus mais en couvre au contraire toutes les variantes, notamment en ce qui concerne le positionnement dans l'espace des divers éléments du dispositif de l'invention.

o          o


o

REVENDICATIONS
:=:=:=:=:=:=:=:=:=:=:=:=:=:=:

**0117964**

1. Dispositif de mesure et de correction du déplacement suivant trois axes orthonormés X,Y et Z des équipages mobiles notamment d'un banc de mesure tridimensionnelle, caractérisé en ce qu'il comprend une source unique de faisceau laser (14) de type connu composé de deux signaux de fréquence F1 et F2 de polarisation circulaire inverse et très proches l'un de l'autre, montée sur le bâti fixe (2) du banc et dirigeant son faisceau sur un premier ensemble de mesure (X1) constitué d'un premier interféromètre ($I_{X1}$) associé à un premier réflectomètre ($RF_{X1}$) et d'un premier récepteur ($R_{X1}$) et aligné suivant un premier axe horizontal X ou Y, lesdits premiers interféromètre et récepteur étant montés fixes et ledit premier réflectomètre ($RF_{X1}$) étant solidaire de l'équipage mobile (3) du banc se déplaçant dans ledit premier axe horizontal, un premier diviseur de faisceau (19), fixe, interposé entre ladite source laser (14) et ledit premier ensemble de mesure (X1) et envoyant par l'intermédiaire d'un premier miroir fixe (20) une partie du faisceau émis sur un second ensemble de mesure (Y2) constitué d'un second miroir (22), d'un second interféromètre ($I_{Y2}$) associé à un second réflectomètre ($RF_{Y2}$) et d'un second récepteur ($R_{Y2}$), aligné suivant le second axe horizontal Y ou X, les seconds miroir, interféromètre et récepteur étant solidaires dudit premier équipage (3) mobile du banc, cependant que ledit second réflectomètre ($RF_{Y2}$) est solidaire du second équipage mobile (4) du banc se déplaçant suivant le second axe horizontal Y ou X et un second diviseur (28) interposé entre ledit premier miroir fixe (20) et le second ensemble de pesure (Y2), solidaire dudit premier équipage mobile (3) et envoyant, par l'intermédiaire d'un troisième miroir (29) également solidaire du premier équipage mobile (3), une partie du faisceau traversant sur un troisième ensemble de mesure constitué d'un quatrième miroir (30), d'un miroir interféromètre ($MI_Z$), d'un troisième récepteur ($R_Z$) et d'un troisième réflectomètre ($RF_Z$), et aligné suivant le troisième axe vertical Z, lesdits second diviseur et troisième miroir étant solidaires dudit premier équipage mobile (3), lesdits quatrième miroir, miroir interféromètre et troisième récepteur étant solidaires dudit second équipage mobile (4), le troisième réflectomètre (RF$_Z$) étant solidaire d'un troisième équipage mobile (5) du banc, lui-même porté par ledit second équipage mobile et se déplaçant suivant ledit axe Z, les divers récepteurs étant reliés à une unité de calcul chargée de traiter les données fournies par les organes de palpage de la tête de mesure (6) du banc, portée par ledit troisième équipage (5).

2. Dispositif suivant la revendication 1, caractérisé en ce qu'afin d'améliorer la précision de mesure en permettant une correction de la position de l'axe Z de déplacement du troisième équipage mobile ou coulisseau vertical (5) porte-palpeur du banc, en particulier lorsque les premier et second équipages (3,4) mobiles sont de dimensions importantes et peuvent prendre un faux équerrage par rapport au bâti sur lequel ils se déplacent, lesdits premier et second ensembles de mesure sont dédoublés chacun en deux ensembles (X1,X2 et Y1,Y2) identiques parallèles disposés au voisinage des extrémités des premier et second équipages mobiles (3,4), à l'aide de diviseurs de faisceau (16,21) et de miroir (17) convenablement disposés.

3. Dispositif suivant les revendications 1 et 2, caractérisé en ce que le faisceau émanant de ladite source (14) traverse ledit premier diviseur (19) puis un diviseur fixe (16) dirigeant une première partie du faisceau incident sur l'un des deux ensembles parallèles de mesure (X1,X2) et une seconde partie du faisceau sur l'autre ensemble par l'intermédiaire d'un miroir fixe (17), le faisceau divisé issu dudit premier diviseur (19) traversant un diviseur (21) dirigeant une première partie du faisceau incident sur l'un des deux ensembles parallèles de mesure (Y1, Y2) et une seconde partie du faisceau sur l'autre ensemble, ledit diviseur (21) étant solidaire dudit premier équipage mobile (3) du banc.

FIG.1.

0117964

FIG.2.

FIG.3.

3/4

0117964

FIG.4

0117964

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | WO-A-8 102 627  (CATERPILLAR TRACTOR CO.) <br> * Titre;  figures 1,2,3,4,5,6,7; page 9, ligne 16 - page 10, ligne 33;  page 11, ligne 21 - page 25, ligne 3 * | 1-3 | G 01 B  11/00 <br> G 01 B   9/02 |
| | --- | | |
| X | DE-A-3 124 357  (DAIMLER-BENZ AG.) <br> *  Figures  1,2,4,5,6;  page  8, paragraphe   2   -   page   17, paragraphe 1 * | 1,2 | |
| | --- | | |
| A | EP-A-0 084 144  (FA. CARL ZEISS) <br> * En entier * | 1 | |
| | ----- | | |

**DOMAINES TECHNIQUES RECHERCHES (Int. Cl. ³)**

G 01 B

Le présent rapport de recherche a été établi pour toutes les revendications

| Lieu de la recherche <br> LA HAYE | Date d'achèvement de la recherche <br> 04-11-1983 | Examinateur <br> VISSER F.P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

------

& : membre de la même famille, document correspondant

OEB Form 1503 03 82